# EUROPEAN PATENT SPECIFICATION

(11) **EP 2 955 838 B1**
(45) Date of publication and mention of the grant of the patent: **28.03.2018**
(21) Application number: 14275135.3
(22) Date of filing: 10.06.2014
(51) Int. Cl.: H02M 7/483, H02J 3/18, H02J 3/36, H02M 7/757

(54) **Semiconductor switching assembly**
Halbleiterschaltungsanordnung
Ensemble de commutation à semi-conducteur

(43) Date of publication of application: 16.12.2015
(73) Proprietor: General Electric Technology GmbH, 5400 Baden (CH)
(72) Inventor: Davidson, Colin Charnock, Staffordshire ST17 4PS (GB); Efika, Ikenna Bruce, Stafford ST16 3QE (GB); Trainer, David Reginald, Alvaston, Derby DE24 0AQ (GB)
(74) Representative: Cleary, Fidelma

(56) References cited:
- US-A1- 2012 112 545

## Description

This invention relates to a semiconductor switching assembly and a semiconductor switching string including a plurality of series-connected such semiconductor switching assemblies, each of the semiconductor switching assembly and the semiconductor switching string being for use in a high voltage direct current (HVDC) power converter.

In power transmission networks alternating current (AC) power is typically converted to direct current (DC) power for transmission via overhead lines and/or under-sea cables. This conversion removes the need to compensate for the AC capacitive load effects imposed by the transmission line or cable and reduces the cost per kilometre of the lines and/or cables, and thus becomes cost-effective when power needs to be transmitted over a long distance.

HVDC power converters are used to convert AC power to DC power. Semiconductor switching elements, such as thyristors, are a key component of HVDC power converters, and act as controlled rectifiers to convert AC power to DC power and vice versa.

US 2012/0112545 A1 discloses a cell for a modular multilevel converter. The cell is in a half-bridge arrangement and includes first and second semiconductor switching elements (Q1, Q2) and a capacitor (C1). When switched on, the first semiconductor switching element (Q1) conducts a cell current while influencing a voltage across the capacitor (C1). When the second semiconductor switching element (Q2) is switched on, it also conducts the cell current but without having any influence over the voltage across the capacitor (C1). In order to avoid short circuiting of the capacitor (C1), the first semiconductor switching element (Q1) should be off when the second semiconductor switching element (Q2) is on, and vice versa.

According to a first aspect of the invention there is provided a semiconductor switching assembly, for use in a HVDC power converter, comprising a main semiconductor switching element including first and second connection terminals, the main semiconductor switching element in use continuing to conduct a reverse recovery current as it turns off, the first and second connection terminals having an active auxiliary circuit electrically connected therebetween, the auxiliary circuit including an auxiliary semiconductor switching element and current capture element which can store and/or dissipate current connected in series with one another, the auxiliary semiconductor switching element having a control unit operatively connected therewith, the semiconductor switching assembly being characterised in that the control unit is configured to switch on the auxiliary semiconductor switching element as the main semiconductor switching element turns off to direct into the current capture element the said reverse recovery current that flows through the main semiconductor switching element while it turns off.

The electron-hole activity across the junctions between alternating layers of N- and P-type material in a real main semiconductor switching element results in such a real semiconductor switching element continuing to conduct a reverse recovery current as it turns off.

Diverting the reverse recovery current flowing through the main semiconductor switching element into the current capture element prevents the reverse recovery current from escaping from the semiconductor switching assembly and thereafter adversely influencing, e.g. the DC and AC currents in an associated HVDC power converter in which the semiconductor switching assembly is located.

In addition, when observed across the first and second connection terminals the semiconductor switching assembly of the invention appears to exhibit an almost ideal turn-off characteristic, i.e. the semiconductor switching assembly appears to virtually cease to conduct current exactly at the instant when the current normally flowing between the first and second connection terminals through the main semiconductor switching element falls to zero (rather than appearing to continue to conduct a reverse current as would be the case if the reverse recovery current flowing through the main semiconductor switching element was to escape from the semiconductor switching assembly).

Optionally the control unit is configured to selectively switch the auxiliary semiconductor switching element on and off a plurality of times while the main semiconductor switching element turns off to control the amount of reverse recovery current diverted into the current capture element.

Such a control unit provides the desired diversion of the reverse recovery current in a manner which can be used additionally to compensate for other performance limitations of the main semiconductor switching element.

Preferably the current capture element stores the reverse recovery current diverted into it from the main semiconductor switching element.

The inclusion of a current capture element which stores the diverted reverse recovery current desirably makes available the energy derived from the stored reverse recovery current, as well as energy from other sources, to provide other compensatory functions in relation to the performance limitations of the main semiconductor switching element or a power converter in which the main semiconductor switching element is located.

Optionally the current capture element is or includes an energy storage device.

An energy storage device, such as a capacitor for example, readily and reliably permits the storage of the reverse recovery current.

In a preferred embodiment of the invention the current capture element dissipates the reverse recovery current diverted into it from the main semiconductor switching element.

Dissipation of the reverse recovery current helps to ensure that the reverse recovery current cannot adversely impact on any other component or aspect of the operation of, e.g. an associated HVDC power converter in which the semiconductor switching assembly of the invention is located.

The current capture element may be or include an impedance having at least one of a resistive component and an inductive component.

Such an impedance readily and reliably permits the safe discharge of the reverse recovery current.

Preferably the auxiliary semiconductor switching element is or includes a transistor.

A transistor, especially one incorporating a wide-band-gap semiconducting material such as silicon carbide, gallium nitride or diamond, has the required voltage performance characteristics to match or even exceed those of the main semiconductor switching element, while at the same time permitting the passage therethrough of a relatively small amount of current to allow capture of the generated reverse recovery current by the current capture element.

Optionally the auxiliary semiconductor switching element is configured to selectively provide bi-directional current transmission capability.

Such an arrangement provides for the desired diversion of a reverse recovery current flowing through the main semiconductor switching element and allows the auxiliary circuit to compensate for other performance limitations of the main semiconductor switching element while it is in both a reverse-biased condition and a forward-biased condition.

The control unit may be additionally configured to switch on the auxiliary semiconductor switching element as the main semiconductor switching element is switched on whereby current flowing from the first connection terminal to the second connection terminal is directed to flow through the auxiliary circuit to reduce the rate of change of current flowing through the main semiconductor switching element immediately after the main semiconductor switching element is switched on.

The diversion of current flowing from the first connection terminal to the second connection terminal in the foregoing manner allows the current arising from external stray capacitances, e.g. within a HVDC power converter, to be diverted through the auxiliary circuit (rather than through the main semiconductor switching element) where it can be safely handled, e.g. stored or discharged, without damaging the main semiconductor switching element. Such a configuration therefore obviates the need for a large saturating inductor (or di/dt reactor), which would otherwise be required to compensate for the relatively low tolerance of rate of change of current that is an inherent performance limitation of some main semiconductor switching elements such as, for example, thyristors.

Moreover, having the control unit configured to switch on the or each auxiliary semiconductor switching element as the main semiconductor switching element is switched on, e.g. configured to switch on the auxiliary semiconductor switching element at the same time or just before the main semiconductor switching element is switched on, desirably allows the semiconductor switching assembly of the invention to compensate for inherent limitations in the performance of the main semiconductor switching element when those limitations are at their most acute.

More particularly, the semiconductor switching assembly of the invention is able to reduce the rate of change of current flowing through the main semiconductor switching element when the element is first switched on and exposed to a large change in current. In this regard prior to being switched on the main semiconductor switching element is in a forward-biased condition, i.e. it is initially switched off but experiencing a positive voltage. Under such conditions the main semiconductor switching element will allow current to flow therethrough, and hence allow current to flow from the first connection terminal to the second connection terminal, following receipt of a turn-on signal, i.e. when it is switched on.

In another preferred embodiment of the invention the control unit is further configured to switch on the auxiliary semiconductor switching element to selectively divert current to flow through the auxiliary circuit to reduce the rate of change of voltage appearing across the main semiconductor switching element.

The inclusion of a control unit that is further configured to divert current to flow through the auxiliary circuit to reduce the rate of change of voltage appearing across the main semiconductor switching element helps to prevent exposure of the main semiconductor switching element to a high rate of change of voltage and an associated high displacement current, i.e. capacitance charging current, while the main semiconductor switching element is turning off or has switched off, and so reduces the risk of unintentionally triggering the main semiconductor switching element, i.e. unintentionally switching on the main semiconductor switching element, which could result in, e.g. a limb short circuit within an associated HVDC power converter in which the semiconductor switching assembly of the invention is located.

According to a second aspect of the invention there is provided a semiconductor switching string, for use in a HVDC power converter, comprising:
a plurality of series-connected semiconductor switching assemblies as described hereinabove; and
a control unit operatively connected with each auxiliary semiconductor switching element,
the or each control unit being configured to switching on a respective auxiliary semiconductor switching element to divert into the corresponding current capture element the reverse recovery current that flows through the corresponding main semiconductor switching element across which the said current capture element is electrically connected while the said corresponding main semiconductor switching element turns off.

The inclusion of at least one control unit configured to switch on a respective auxiliary semiconductor switching element to divert into the corresponding current capture element the reverse recovery current flowing through the corresponding main semiconductor switching element allows the semiconductor switching string of the invention to compensate for the non-ideal turn-off characteristics of the various main semiconductor switching elements in the switching string, i.e. the flow through each main semiconductor switching element of a reverse recovery current, such that the semiconductor switching string as a whole exhibits an almost ideal turn off characteristic, i.e. the switching string as a whole appears to almost cease to conduct current at the instance when the current normally flowing through the string falls to zero.

Preferably the or each control unit is additionally configured to compensate for the flow of different amounts of reverse recovery current through respective main semiconductor switching elements in the switching string by coordinating the switching on and off of the auxiliary semiconductor switching elements in the switching string to pass respective portions of reverse recovery current between respective main semiconductor switching elements whereby each corresponding current capture element receives the same amount of reverse recovery current such that each main semiconductor switching element establishes the same level of reverse recovery voltage thereacross.

Having each main semiconductor switching assembly establish the same reverse recovery voltage thereacross means that each main semiconductor switching element becomes forward-biased, i.e. experiences a forward voltage and hence is ready to be switched on and allow normal current to flow therethrough, at essentially the same time.

In this way the semiconductor switching string of the invention is able to compensate for different main semiconductor switching elements having different turn-off performance characteristics, i.e. different reverse recovery charge characteristics which give rise to the flow of different amounts of reverse recovery current, and so permits the mix and match of main semiconductor switching elements, e.g. thyristors, from not just different batches but from different suppliers.

Furthermore, such a switching string drastically reduces the size of an associated remedial component, e.g. a passive damping circuit electrically associated with each main semiconductor switching element, that would otherwise be required in order to mitigate the impact of the main semiconductor switching elements having different reverse recovery voltages thereacross.

Optionally the or each control unit is still further configured to monitor the difference in reverse recovery current flowing through respective main semiconductor switching elements to establish the size of reverse recovery current portion to pass between the said respective main semiconductor switching elements.

Having one or more control units so configured provides a degree of control to the coordinated switching of the auxiliary semiconductor switching elements which allows each main semiconductor switching element to automatically establish the same level of reverse recovery voltage thereacross.

There now follows a brief description of preferred embodiments of the invention, by way of non-limiting example, with reference being made to the accompanying drawings in which:
Figure 1 shows a schematic view of a semiconductor switching assembly according to an embodiment of the invention which forms a part of a semiconductor switching string according to another embodiment of the invention;
Figures 2(a) to 2(e) show various auxiliary semiconductor switching elements according to different embodiments of the invention;
Figure 3 shows the almost ideal turn-off characteristic achieved by the semiconductor switching string shown in Figure 1;
Figure 4 shows a semiconductor switching string according to a further embodiment of the invention; and
Figures 5 shows the same level of reverse recovery voltage across respective main semiconductor switching elements achieved by the semiconductor switching string shown in Figure 4.

A semiconductor switching assembly according to a first embodiment of the invention is designated generally by reference numeral 10.

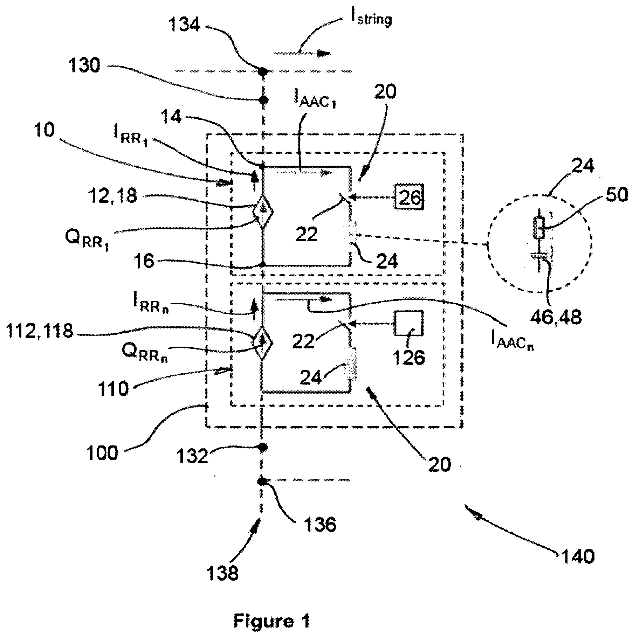

The first semiconductor switching assembly 10 includes a first main semiconductor switching element 12 (shown schematically in Figure 1) which has first and second connection terminals 14, 16.

In the embodiment shown the first main semiconductor switching element 12 is a first main thyristor 18, although in other embodiments of the invention a different first main semiconductor switching element may be used such as a diode, Light-Triggered Thyristor (LTT), Gate Turn-Off Thyristor (GTO), Gate Commutated Thyristor (GCT) or Integrated Gate Commutated Thyristor (IGCT). Preferably the first main semiconductor switching element 12 is optimised for lowest conduction (on-state) losses at the expense of other parameters such as turn-on di/dt capability, turn-off characteristics and off-state dv/dt capability.

The first main thyristor 18 includes a gate (not shown) which defines a control terminal via which the first main thyristor 18 may be switched on, e.g. by a higher level controller (not shown).

When the first main thyristor 18 is so switched on normal current flows through the first main thyristor 18 from the first connection terminal 14 to the second connection terminal 16.

The first main thyristor 18 is, however, a naturally commutated switching element which means that while it can be switched on via its gate control terminal, it can only be turned off by arranging for the circuit in which it is located to force the current flowing through it to fall to zero and then maintaining a period, typically some few hundred microseconds, during which the first main thyristor 18 is reverse-biased, i.e. a negative voltage is applied between its first and second terminals 14, 16. In contrast some thyristor derivatives, such as GTO and IGCT mentioned above, are self-commutated whereby they can be both switched on and switched off via their gate control terminal.

In the meantime, because the first main thyristor 18 is a real (as opposed to ideal) thyristor, electron-hole activity occurs across the junctions between alternating layers of N- and P-type material within the first main thyristor 18. Such electron-hole activity means that while the main thyristor 18 is reverse-biased it continues to conduct current I_{RR1} in a reverse direction, i.e. from the second connection terminal 16 to the first connection terminal 14, for some hundreds of microseconds after the current therethrough falls to zero, i.e. while the main thyristor 18 turns completely off. The time integral of the reverse recovery current I_{RR1} is the reverse recovered charge Q_{RR1}, i.e. the stored charge, of the main thyristor 18.

In light of the foregoing the first main thyristor 18 is illustrated schematically in Figure 1 as a source of first reverse recovery charge Q_{RR1}.

The first main semiconductor switching element 12, i.e. the first main thyristor 18, has an active auxiliary circuit 20 electrically connected between the first and second terminals 14, 16 thereof.

The auxiliary circuit 20 includes a first auxiliary semiconductor switching element 22 and a current capture element 24 that are connected in series with one another. The first auxiliary semiconductor switching element 22 has a control unit 26 operatively connected therewith. The control unit 26 is configured to switch on the first auxiliary semiconductor switching element 22 to divert into the current capture element 24 the first reverse recovery current I_{RR1} that flows through the first main thyristor 18 while it turns off (after being switched off).

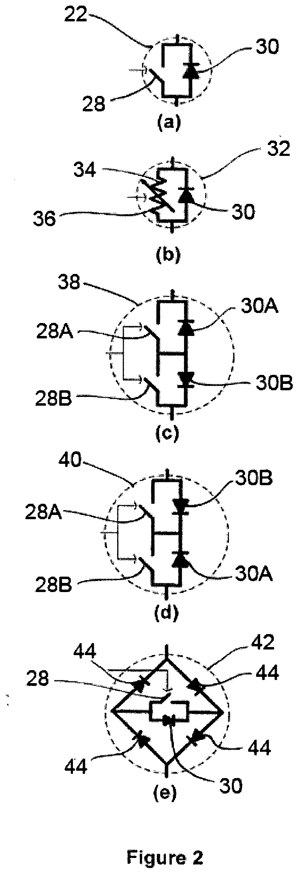

More particularly the first auxiliary semiconductor switching element 22 includes a first transistor 28 which, as shown in Figure 2(a), is configured to allow current to flow through the auxiliary circuit 20 from the first connection terminal 14 to the second connection terminal 16.

The first transistor 28 is an n-channel insulated-gate bipolar transistor (IGBT), although many other transistors may be used such as, for example, a bipolar junction transistor (BJT), a metal-oxide-semiconductor field-effect transistor (MOSFET), or a junction gate field-effect transistor (JFET). A transistor assembly, such as a MOSFET-JFET cascode circuit incorporating a super-cascode arrangement of 50V MOSFETs and a series string of 1200V Silicon Carbide JFETs, or a direct series connection of low voltage MOSFETs or IGBTs, may also be used. In any event the transistor 28 included in the example embodiment has a relatively high voltage rating of approximately 9kV to 10kV, and a relatively high pulse current rating of a few hundred amps, but a relatively low average current rating of a few amps.

The first transistor 28 has an anti-parallel diode 30 connected thereacross which protects the first transistor 28 from reverse voltages while the main thyristor 18 is forward-biased. In other embodiments of the invention (not shown) the separate anti-parallel diode could be omitted and instead use made of an intrinsic body-diode which is included within some transistors.

Figure 2(b) shows a second possible auxiliary semiconductor switching element 32 which may be employed in another embodiment of the invention. The second possible auxiliary semiconductor switching element 32 includes a second transistor 34 which is operated in its triode region as a voltage controlled resistor 36.

Figures 2(c) to 2(e) show additional third, fourth and fifth possible auxiliary semiconductor switching elements 38, 40, 42 which could be employed in still further embodiments of the invention. Each of the third, fourth and fifth auxiliary semiconductor switching elements 38, 40, 42 selectively provides bi-directional current transmission capability, i.e. each can conduct current in first and second opposite directions.

Each of the third and fourth auxiliary semiconductor switching elements 38, 40 includes first and second transistors 28A, 28B each of which has a corresponding protective anti-parallel diode 30A, 30B associated therewith.

The fifth possible auxiliary semiconductor switching element 42 includes a first transistor 28 and associated protective anti-parallel diode 30 combination that is arranged within a full bridge circuit of further diodes 44.

The current capture element 24, with which the first auxiliary semiconductor switching element 22 is connected in series, includes an energy storage device 46 in the form of a capacitor 48 (although other forms of energy storage device may also be used) and a series-connected impedance 50. In the embodiment shown the impedance 50 has both a resistive component, i.e. it includes a resistance, and an inductive component, i.e. it includes an inductance. However, in other embodiments of the invention the impedance 50 need only include one or other of a resistive component and an inductive component. Moreover, in still further embodiments of the invention, the current capture element 24 need only include one or other of the energy storage device 46 and the impedance 50.

Returning to the embodiment shown, the inclusion of an energy storage device 46, i.e. capacitor 48, allows the current capture element 24 to store the first reverse recovery current I_{RR1} that flows through the first main thyristor 18 as it turns off, while the inclusion of an impedance 50 alternatively allows the current capture element 24 to discharge the first reverse recovery current I_{RR1} that flows through the first main thyristor 18.

In use, the first semiconductor switching assembly 10 operates as follows.

After the first main thyristor 18 is switched off, i.e. after it is reverse-biased to force the current flowing through it to fall to zero, a first reverse recovery current I_{RR1} continues to flow through the main thyristor 18 while is turns off completely. During such flow of the reverse recovery current I_{RR1} the control unit 26 switches on the first auxiliary semiconductor switching element 22 to create a current path via the active auxiliary circuit 20 through which the first reverse recovery current I_{RR1} flows as a first active auxiliary circuit current I_{AAC1}.

In this way the first auxiliary semiconductor switching element diverts into the current capture element 24 the first reverse recovery current I_{RR1} that flows through the first main thyristor 18 as it turns off, and so prevents the reverse recovery current I_{RR1} from escaping from the first semiconductor switching assembly 10 and adversely influencing, e.g. the DC and AC currents within a HVDC power converter in which the first semiconductor switching assembly is located. The current capture element 24 dissipates the reverse recovery current I_{RR1} diverted into it using the impedance 50.

In other embodiments of the invention, however, the current capture element 24 may dissipate only some of the reverse recovery current I_{RR1} diverted into it and may store the remainder in the energy storage device 46, i.e. capacitor 48. In still further embodiments of the invention the current capture element 24 may store all of the reverse recovery current I_{RR1} diverted into it in the capacitor 48.

The energy storage device 46, i.e. capacitor 48, might also store energy by having the current flowing from the first connection terminal 14 to the second connection terminal 16 during initial switching on of the main thyristor 18 diverted into it. It might also store energy from current passed to it in some other manner from the first and second terminals.

In any such instance the stored energy could be used at the start of the aforementioned process, i.e. when the voltage across the main thyristor 18 is effectively zero, to provide the reverse recovery current (via discharge of the energy) that the main thyristor 18 wants to conduct.

In addition to the foregoing, the diversion of the first reverse recovery current I_{RR1} into the current capture element 24 means that, when observed across the first and second connection terminals 14, 16, the first semiconductor switching assembly 10 appears to exhibit an almost ideal turn-off characteristic. In other words the first semiconductor switching assembly 10 appears to virtually cease to conduct current exactly at the instant when the current normally flowing through the first main thyristor 18, i.e. from the first connection terminal 14 to the second connection terminal 16, falls to zero. This is because the first reverse recovery current I_{RR1} that would otherwise give the appearance of a reverse current continuing to flow was not allowed to escape from the first semiconductor switching assembly 10.

A further semiconductor switching assembly (not shown) according to another embodiment of the invention may include a control unit that is configured to selectively switch the corresponding auxiliary semiconductor switching element on and off a plurality of times while a reverse recovery current flows through the corresponding main semiconductor switching element.

In such a manner the said control unit is able to control the amount of reverse recovery current diverted into the associated current capture element. Such an arrangement also permits the control unit to control the rate at which reverse recovery current is diverted into the current capture element, and hence the rate at which energy is stored in the current capture element.

The control unit may also switch the corresponding auxiliary semiconductor switching element on and off a plurality of times at other periods so as to control the rate at which, e.g. other current flowing between the first and second connection terminals is diverted into the current capture element.

In yet further embodiments of the invention (not shown) the control unit may be additionally configured to switch on the auxiliary semiconductor switching element as the main semiconductor switching element, e.g. the main thyristor, is switched on so that current flowing from the first connection terminal to the second connection terminal is directed to flow through the auxiliary circuit to reduce the rate of change of current flowing through the main semiconductor switching element immediately after the main semiconductor switching element is switched on.

In this way current arising from external stray capacitances, e.g. within a HVDC power converter, is diverted through the auxiliary circuit (rather than through the main semiconductor switching element) where it can be safely handled, e.g. stored or discharged, without damaging the main semiconductor switching element.

In still further embodiments of the invention (not shown) the control unit may be further configured to switch on the auxiliary semiconductor switching element to selectively divert current to flow through the auxiliary circuit to reduce the rate of change of voltage appearing across the main semiconductor switching element.

Such embodiments help to prevent exposure of the main semiconductor switching element to a high rate of change of voltage and an associated high displacement current, i.e. capacitance charging current, while the main semiconductor switching element is turning off or has switched off. As such these embodiments reduce the risk of unintentionally triggering the main semiconductor switching element, i.e. unintentionally switching on the main semiconductor switching element, which could result in, e.g. a limb short circuit within an associated HVDC power converter in which the semiconductor switching assembly is located.

The first semiconductor switching assembly 10 shown in Figure 1 forms part of a first semiconductor switching string 100 according to a second embodiment of the invention.

As illustrated schematically in Figure 1, the first semiconductor switching string 100 includes a plurality of, i.e. n, series-connected semiconductor switching assemblies 10, 110. In a practical embodiment n may be a hundred or so, e.g. 100 to 300. For the sake of conciseness, however, only the first semiconductor switching assembly 10 and an nth semiconductor switching assembly 110 are shown in Figure 1.

The nth semiconductor switching assembly 110 is similar to the first semiconductor switching assembly 10, and likewise includes an nth main semiconductor switching element 112 which has first and second connection terminals 14, 16.

The nth main semiconductor switching element 112 is again an nth main thyristor 118, although in other embodiments of the invention a different main semiconductor switching element may similarly be used. The nth main thyristor 118 includes a gate (not shown) which defines a control terminal via which the nth main thyristor 118 may be switched on, e.g. by the same higher level controller as the first main thyristor 18.

When the nth main thyristor 118 is so switched on normal current similarly flows through the first main thyristor 118 from the first connection terminal 14 to the second connection terminal 16, as in the first main thyristor 18.

The nth main thyristor 118 is also a naturally commutated switching element with real (as opposed to ideal) characteristics, such an nth reverse recovery current I_{RRn} similarly flows through the nth main thyristor 118 while the nth main thyristor 118 turns off.

The time integral of the nth reverse recovery current I_{RRn} is Q_{RRn}, and so the nth main thyristor 118 is similarly illustrated schematically in Figure 1 as a source of nth reverse recovery charge Q_{RRn}.

The nth main semiconductor switching element 112, i.e. the nth main thyristor 118, has an active auxiliary circuit 20, which is identical to that in the first semiconductor switching assembly 10, electrically connected between the first and second terminals 14, 16 thereof.

Accordingly, the auxiliary circuit 20 in the nth semiconductor switching assembly 110 includes a first auxiliary semiconductor switching element 22 and a current capture element 24 that are connected in series with one another.

In the first semiconductor switching string 100 embodiment shown, each of the first auxiliary semiconductor switching elements 22 in the first and nth semiconductor switching assemblies 10, 110 has a separate control unit 26, 126 operatively connected therewith. In other embodiments however, two or more of the first auxiliary semiconductor switching elements 22 may share a common control unit.

The control unit 26 operatively connected with the first auxiliary semiconductor switching element 22 in the first semiconductor switching assembly 10 remains configured to switch on the corresponding first auxiliary semiconductor switching element 22 to divert into the corresponding current capture element 24 the first reverse recovery current I_{RR1} that flows through the first main thyristor 18 while it turns off, after being switched off.

Similarly, the control unit 126 operatively connected with the first auxiliary semiconductor switching element in the nth semiconductor switching assembly 110 is configured to switch on the corresponding first auxiliary semiconductor switching element 22 to divert into the corresponding current capture element 24 the nth reverse recovery current I_{RRn} that flows through the nth main thyristor 118 while it turns off.

The first semiconductor switching string 100 defines an anode terminal 130 and a cathode terminal 132 at respective ends thereof. Furthermore, in Figure 1 the first semiconductor switching string 100 is shown connected between a first DC terminal 134 and an AC terminal 136 within a first limb portion 138 of a HVDC power converter 140. In other embodiments of the invention, however, the first semiconductor switching string 100 may be located in a different region of a HVDC power converter.

In use, the first semiconductor switching string 100 operates as follows.

After the first main thyristor 18 is switched off and a first reverse recovery current I_{RR1} again flows therethrough as the main thyristor 18 turns completely off, the control unit 26 in the first semiconductor switching assembly 10 switches on the corresponding first auxiliary semiconductor switching element 22. This creates a current path via the corresponding active auxiliary circuit 20 through which the first reverse recovery current I_{RR1} flows as a first active auxiliary circuit current I_{AAC1}.

In this way the first reverse recovery current I_{RR1} flowing through the first main thyristor 18 is again diverted into the current capture element 24 in the first semiconductor switching assembly 10 before it is able to escape from the first semiconductor switching assembly 10.

At the same time the nth main thyristor 118 is switched off and an nth reverse recovery current I_{RRn} similarly beings to flow therethrough. The control unit 126 in the nth semiconductor switching assembly 110 switches on the corresponding first auxiliary semiconductor switching element 22. This creates a current path via the corresponding active auxiliary circuit 20 through which the nth reverse recovery current I_{RRn} flows as an nth active auxiliary circuit current I_{AACn}.

In this way the nth reverse recovery current I_{RRn} flowing through the nth main thyristor 118 is diverted into the current capture element 24 in the nth semiconductor switching assembly 110 before it too is able to escape from the nth semiconductor switching assembly 110.

It follows that the reverse recovery current I_{RR1}, I_{RRn} flowing through a respective main thyristor 18, 118 is diverted into the active auxiliary circuit 20 of the corresponding first and nth semiconductor switching assemblies 10, 110 such that no reverse recovery current I_{RR1}, I_{RRn} escapes from the first semiconductor switching string 100. Such reverse recovery currents I_{RR1}, I_{RRn} cannot therefore adversely influence, e.g. the DC and AC currents within the HVDC power converter 140 in which the first semiconductor switching string 100 is located.

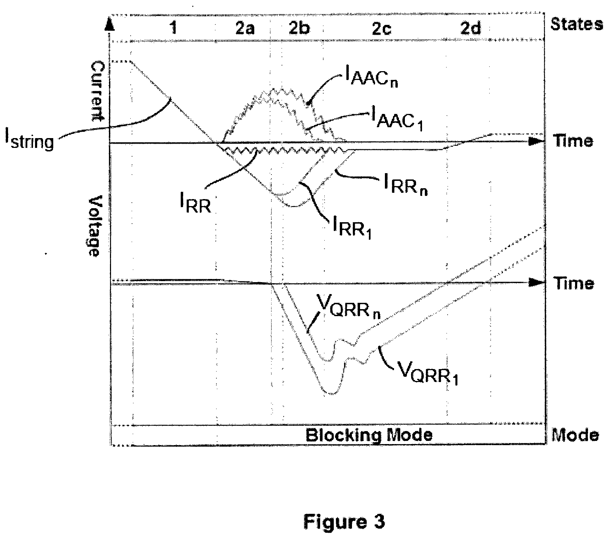

In addition the diversion into the current capture element 24 of the corresponding first and nth semiconductor switching assembly 10, 110 of both the first and nth reverse recovery currents I_{RR1}, I_{RRn} by means that, when observed across the anode and cathode terminals 130, 132 of the first semiconductor switching string 100, the first semiconductor switching string 100 appears to exhibit an almost ideal turn-off characteristic. In other words the first semiconductor switching string 100 appears to virtually cease to conduct current I_{String} exactly at the instant when the current I_{String} normally flowing through the first semiconductor switching string 100 falls to zero, i.e. as shown in the upper portion of Figure 3.

As well as the foregoing, each of the control units 26, 126 is additionally configured to regulate the corresponding first and nth reverse recovery currents I_{RR1}, I_{RRn}, i.e. the corresponding first and nth active auxiliary circuit currents I_{AAC1}, I_{AACn}, flowing into the associated current capture element 24, e.g. by switching the corresponding first auxiliary semiconductor switching element 22 on and off a plurality of times while the associated reverse recovery current I_{RR1}, I_{RRn} flows through the corresponding main thyristor 18, 118. In this way the corresponding current waveforms I_{AAC1}, I_{AACn} take the form shown in Figure 3, although in other embodiments of the invention the control units 26, 126 may employ a different form of regulation such that the associated current waveforms differ from those shown in Figure 3.

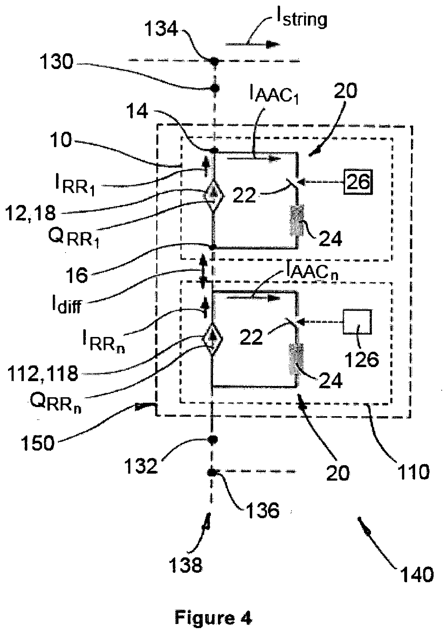

A second semiconductor switching string according to a third embodiment of the invention is designated generally by reference numeral 150. The second semiconductor switching string 150 is, as shown in Figure 4, similar to the first semiconductor switching string 100 and like features share the same reference numerals.

However, the second semiconductor switching string 150 differs from the first semiconductor switching string 100 in that each control unit 26, 126 is additionally configured to compensate for the flow of different amounts of reverse recovery current, e.g. I_{RR1} < I_{RRn}, through respective main semiconductor switching elements 12, 112, i.e. respective main thyristors 18, 118, in the switching string 150. Such differing amounts of reverse recovery current I_{RR1}, I_{RRn} typically will arise because the main thyristors 18, 118 have different reverse recovery charge Q_{RR1}, Q_{RRn} characteristics, e.g. Q_{RRn} > Q_{RR1}, although other factors can come into play.

The respective control units 26, 126 achieve such compensation by coordinating the switching on and off of the respective first auxiliary semiconductor switching elements 22 in each of the various semiconductor switching assemblies 10, 110 in the second switching string 150 to pass respective portions of reverse recovery current I_{diff} between respective main semiconductor switching elements 12, 112, i.e. between respective main thyristors 18, 118 whereby each of the corresponding current capture elements 24 receives substantially the same amount of reverse recovery current I_{RR1}, I_{RRn}, i.e. each of the corresponding active auxiliary circuit currents I_{AAC1}, I_{AACn,} flowing into the associated current capture element 24 is modified so that each has substantially the same size.

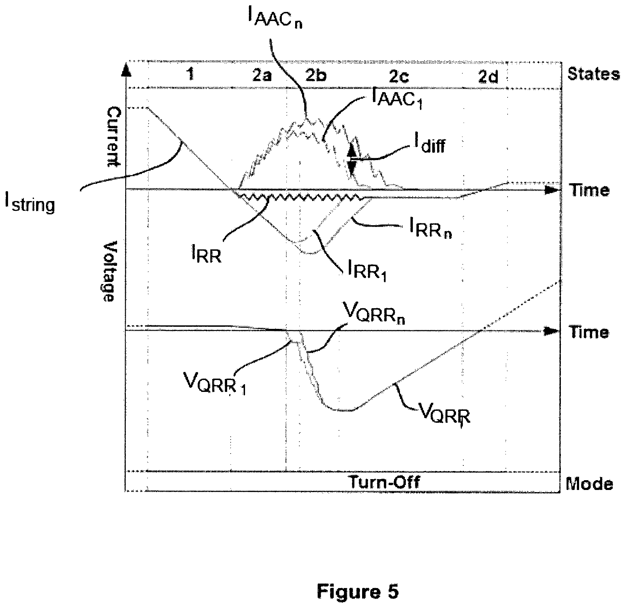

In use, the aforementioned step means that each main semiconductor switching element 12, 112, i.e. each main thyristor 18, 118, is able in time to establish the same level of reverse recovery voltage V_{QRR1}, V_{QRRn} thereacross, as shown in the lower portion of Figure 5.

Having the reverse recovery voltage V_{QRR1}, V_{QRRn} across each main semiconductor switching assembly 12, 112, i.e. each main thyristor 18, 118, converge to a common value V_{QRR} results in each main semiconductor switching element 12, 112 becoming forward-biased, i.e. experiencing a forward voltage, and hence being ready to be switched on and allow normal current to flow therethrough, at essentially the same time. This, in turn, removes the need to establish an arbitrary but precise time delay which would otherwise be needed to allow all of the main semiconductor switching elements 12, 112 to completely turn off and thereafter become forward-biased so as to permit ongoing control of, e.g. a HVDC power converter in which the semiconductor switching string is located.

The respective control units 26, 126 are also configured to monitor the difference in reverse recovery current I_{RR1}, I_{RRn} flowing through respective main semiconductor switching elements 12, 122, i.e. respective main thyristors 18, 118, in order to establish the size of reverse recovery current portion I_{diff} to pass between the said respective main semiconductor switching elements 12, 122, i.e. between the said respective main thyristors 18, 118.

## Claims

1. A semiconductor switching assembly (10; 110), for use in a HVDC power converter, comprising a main semiconductor switching element (12; 112) including first and second connection terminals (14, 16), the main semiconductor switching element (12; 112) in use continuing to conduct a reverse recovery current (I_{RR1}, I_{RRN}) as it turns off, the first and second connection terminals (14, 16) having an active auxiliary circuit (20) electrically connected therebetween, the auxiliary circuit (20) including an auxiliary semiconductor switching element (22; 32; 38; 40; 42) and current capture element (24) which can store and/or dissipate current connected in series with one another, the auxiliary semiconductor switching element (22; 32; 38; 40; 42) having a control unit (26; 126) operatively connected therewith, the semiconductor switching assembly (10; 110) being **characterised in that** the control unit (26; 126) is configured to switch on the auxiliary semiconductor switching element (22; 32; 38; 40; 42) as the main semiconductor switching element (12; 112) turns off to direct into the current capture element (24) the said reverse recovery current (I_{RR1}, I_{RRN}) that flows through the main semiconductor switching element (12; 112) while it turns off.

2. A semiconductor switching assembly (10; 110) according to Claim 1 wherein the control unit (26; 126) is configured to selectively switch the auxiliary semiconductor switching element (22; 32; 38; 40; 42) on and off a plurality of times while the main semiconductor switching element (12; 112) turns off to control the amount of reverse recovery current (I_{RR1}, I_{RRN}) diverted into the current capture element (24).

3. A semiconductor switching assembly (10; 110) according to Claim 1 or Claim 2 wherein the current capture element (24) stores the reverse recovery current (I_{RR1}, I_{RRN}) diverted into it from the main semiconductor switching element (12; 112).

4. A semiconductor switching assembly (10; 110) according to Claim 3 wherein the current capture element (24) is or includes an energy storage device (46).

5. A semiconductor switching assembly (10; 110) according to any preceding claim wherein the current capture element (24) dissipates the reverse recovery current (I_{RR1}, I_{RRN}) diverted into it from the main semiconductor switching element (12; 112).

6. A semiconductor switching assembly (10; 110) according to Claim 5 wherein the current capture element (24) is or includes an impedance (50) having at least one of a resistive component and an inductive component.

7. A semiconductor switching assembly (10; 110) according to any preceding claim wherein the auxiliary semiconductor switching element (22; 32; 38; 40; 42) is or includes a transistor (28).

8. A semiconductor switching assembly (10; 110) according to any preceding claim wherein the auxiliary semiconductor switching element (22; 32; 38; 40; 42) is configured to selectively provide bi-directional current transmission capability.

9. A semiconductor switching assembly (10; 110) according to any preceding claim wherein the control unit (26; 126) is additionally configured to switch on the auxiliary semiconductor switching element (22; 32; 38; 40; 42) as the main semiconductor switching element (12; 112) is switched on whereby current flowing from the first connection terminal (14) to the second connection terminal (16) is directed to flow through the auxiliary circuit (20) to reduce the rate of change of current flowing through the main semiconductor switching element (12; 112) immediately after the main semiconductor switching element (12; 112) is switched on.

10. A semiconductor switching assembly (10; 110) according to any preceding claim wherein the control unit (26; 126) is further configured to switch on the auxiliary semiconductor switching element (22; 32; 38; 40; 42) to selectively divert current to flow through the auxiliary circuit (20) to reduce the rate of change of voltage appearing across the main semiconductor switching element (12; 112).

11. A semiconductor switching string (100), for use in a HVDC power converter, comprising:
a plurality of series-connected semiconductor switching assemblies (10; 110) according to any preceding claim; and
a control unit (26; 126) operatively connected with each auxiliary semiconductor switching element (22; 32; 38; 40; 42),
the or each control unit (26; 126) being configured to switch on a respective auxiliary semiconductor switching element (22; 32; 38; 40; 42) to divert into the corresponding current capture element (24) the reverse recovery current (I_{RR1}, I_{RRN}) that flows through the corresponding main semiconductor switching element (12; 112) across which the said current capture element (24) is electrically connected while the said corresponding main semiconductor switching element (12; 112) turns off.

12. A semiconductor switching string (100) according to Claim 11 wherein the or each control unit (26; 126) is additionally configured to compensate for the flow of different amounts of reverse recovery current (I_{RR1}, I_{RRN}) through respective main semiconductor switching elements (12; 112) in the switching string (100) by coordinating the switching on and off of the auxiliary semiconductor switching elements (22; 32; 38; 40; 42) in the switching string (100) to pass respective portions of reverse recovery current (I_{RR1}, I_{RRN}) between respective main semiconductor switching elements (12; 112) whereby each corresponding current capture element (24) receives the same amount of reverse recovery current (I_{RR1}, I_{RRN}) such that each main semiconductor switching element (12; 112) establishes the same level of reverse recovery voltage thereacross.

13. A semiconductor switching string (100) according to Claim 12 wherein the or each control unit (26; 126) is still further configured to monitor the difference in reverse recovery current (I_{RR1}, I_{RRN}) flowing through respective main semiconductor switching elements (12; 112) to establish the size of reverse recovery current portion to pass between the said respective main semiconductor switching elements (12; 112).

## Patentansprüche

1. Halbleiterschaltbaugruppe (10; 110) zum Gebrauch in einem Hochspannungsgleichstrom-Wandler, umfassend ein Haupthalbleiterschaltelement (12; 112) mit ersten und zweiten Verbindungsanschlüssen (14, 16), wobei das Haupthalbleiterschaltelement (12; 112) im Gebrauch weiterhin einen Sperrverzögerungsstrom (I_{RR1}, I_{RRN}) leitet, wenn es abschaltet, wobei die ersten und zweiten Verbindungsanschlüsse (14, 16) einen aktiven Hilfskreis (20) aufweisen, der elektrisch dazwischen verbunden ist, wobei der Hilfskreis (20) ein Hilfshalbleiterschaltelement (22; 32; 38; 40; 42) und Stromerfassungselement (24), das Strom speichern und/oder abführen kann, enthält, welche in Reihe geschaltet sind, wobei das Hilfshalbleiterschaltelement (22; 32; 38; 40; 42) eine Steuereinheit (26; 126) aufweist, die betriebsfähig damit verbunden ist, wobei die Halbleiterschaltbaugruppe (10; 110) **dadurch gekennzeichnet ist, dass** die Steuereinheit (26; 126) dazu konfiguriert ist, das Hilfshalbleiterschaltelement (22; 32; 38; 40; 42) einzuschalten, wenn das Haupthalbleiterschaltelement (12; 112) abschaltet, um den Sperrverzögerungsstrom (I_{RR1}, I_{RRN}) in das Stromerfassungselement (24) zu leiten, der durch das Haupthalbleiterschaltelement (12; 112) fließt, während es abschaltet.

2. Halbleiterschaltbaugruppe (10; 110) nach Anspruch 1, wobei die Steuereinheit (26; 126) dazu konfiguriert ist, das Hilfshalbleiterschaltelement (22; 32; 38; 40; 42) mehrmals selektiv ein- und abzuschalten, während das Haupthalbleiterschaltelement (12; 112) abschaltet, um die Menge des Sperrverzögerungsstroms (I_{RR1}, I_{RRN}) zu steuern, der in das Stromerfassungselement (24) abgeleitet wird.

3. Halbleiterschaltbaugruppe (10; 110) nach einem der Ansprüche 1 oder 2, wobei das Stromerfassungselement (24) den Sperrverzögerungsstrom (I_{RR1}, I_{RRN}) speichert, der vom Haupthalbleiterschaltelement (12; 112) dorthin abgeleitet wird.

4. Halbleiterschaltbaugruppe (10; 110) nach Anspruch 3, wobei das Stromerfassungselement (24) ein Energiespeichergerät (46) ist oder ein solches enthält.

5. Halbleiterschaltbaugruppe (10; 110) nach einem der vorstehenden Ansprüche, wobei das Stromerfassungselement (24) den Sperrverzögerungsstrom (I_{RR1}, I_{RRN}) abführt, der vom Haupthalbleiterschaltelement (12; 112) dorthin abgeleitet wird.

6. Halbleiterschaltbaugruppe (10; 110) nach Anspruch 5, wobei das Stromerfassungselement (24) eine Impedanz (50) ist oder eine solche enthält, die zumindest eine einer Widerstandskomponente oder einer Induktionskomponente aufweist.

7. Halbleiterschaltbaugruppe (10; 110) nach einem der vorstehenden Ansprüche, wobei das Hilfshalbleiterschaltelement (22; 32; 38; 40; 42) ein Transistor (28) ist oder einen solchen enthält.

8. Halbleiterschaltbaugruppe (10; 110) nach einem der vorstehenden Ansprüche, wobei das Hilfshalbleiterschaltelement (22; 32; 38; 40; 42) zum selektiven Vorsehen von bidirektionaler Stromübertragungsfähigkeit konfiguriert ist.

9. Halbleiterschaltbaugruppe (10; 110) nach einem der vorstehenden Ansprüche, wobei die Steuereinheit (26; 126) zusätzlich zum Einschalten des Hilfshalbleiterschaltelements (22; 32; 38; 40; 42) konfiguriert ist, wenn das Haupthalbleiterschaltelement (12; 112) eingeschaltet wird, wodurch Strom, der vom ersten Verbindungsanschluss (14) zum zweiten Verbindungsanschluss (16) fließt, zum Fließen durch den Hilfskreis (20) geleitet wird, um die Änderungsrate von Strom zu reduzieren, der durch das Haupthalbleiterschaltelement (12; 112) fließt, unmittelbar nachdem das Haupthalbleiterschaltelement (12; 112) eingeschaltet wurde.

10. Halbleiterschaltbaugruppe (10; 110) nach einem der vorstehenden Ansprüche, wobei die Steuereinheit (26; 126) weiter zum Einschalten des Hilfshalbleiterschaltelements (22; 32; 38; 40; 42) zum selektiven Ableiten des Flusses durch den Hilfskreis (20) konfiguriert ist, um die Änderungsrate von Spannung zu reduzieren, die über das Haupthalbleiterschaltelement (12; 112) hinweg auftritt.

11. Halbleiterschaltreihe (100) zum Gebrauch in einem Hochspannungsgleichstrom-Wandler, umfassend:
eine Vielzahl von in Reihe geschalteten Halbleiterschaltbaugruppen (10; 110) gemäß einem der vorstehenden Ansprüche; und
eine Steuereinheit (26; 126), die mit jedem Hilfshalbleiterschaltelement (22; 32; 38; 40; 42) verbunden ist,
wobei die oder jede Steuereinheit (26; 126) zum Einschalten eines jeweiligen Hilfshalbleiterschaltelements (22; 32; 38; 40; 42) zum Ableiten des Sperrverzögerungsstroms (I_{RR1}, I_{RRN}) in das entsprechende Stromerfassungselement (24) konfiguriert ist, der durch das entsprechende Haupthalbleiterschaltelement (12; 112) fließt, über das das Stromerfassungselement (24) elektrisch verbunden ist, während das entsprechende Haupthalbleiterschaltelement (12; 112) abschaltet.

12. Halbleiterschaltreihe (100) nach Anspruch 11, wobei die oder jede Steuereinheit (26; 126) zusätzlich zum Ausgleichen des Flusses von verschiedenen Mengen von Sperrverzögerungsstrom (I_{RR1}, I_{RRN}) durch die jeweiligen Haupthalbleiterschaltelemente (12; 112) in der Schaltreihe (100) durch Koordinieren des Ein- und Abschaltens der Hilfshalbleiterschaltelemente (22; 32; 38; 40; 42) in der Schaltreihe (100) konfiguriert ist, um jeweilige Anteile von Sperrverzögerungsstrom (I_{RR1}, I_{RRN}) zwischen jeweiligen Haupthalbleiterschaltelementen (12; 112) weiterzugeben, wobei jedes entsprechende Stromerfassungselement (24) dieselbe Menge von Sperrverzögerungsstrom (I_{RR1}, I_{RRN}) aufnimmt, sodass jedes Haupthalbleiterschaltelement (12; 112) denselben Pegel von Sperrverzögerungsstrom darüber hinweg einrichtet.

13. Halbleiterschaltreihe (100) nach Anspruch 12, wobei die oder jede Steuereinheit (26; 126) wiederum weiter zum Überwachen der Differenz des Sperrverzögerungsstroms (I_{RR1}, I_{RRN}) konfiguriert ist, der durch jeweilige Haupthalbleiterschaltelemente (12; 112) fließt, um die Größe des Sperrverzögerungsstromanteils zum Weitergeben zwischen den jeweiligen Haupthalbleiterschaltelementen (12; 112) einzurichten.

## Revendications

1. Ensemble de commutation à semi-conducteurs (10 ; 110) pour utilisation dans un convertisseur de puissance CCHT (en courant continu haute tension), comprenant un élément de commutation à semi-conducteurs principal (12; 112) comprenant une première et une seconde borne de connexion (14, 16), l'élément de commutation à semi-conducteurs principal (12; 112) en service continuant à conduire un courant de récupération inverse (I_{RR1}, I_{RRN}) lorsqu'il est hors circuit, la première et la seconde borne de connexion (14, 16) ayant un circuit auxiliaire actif (20) connecté électriquement entre elles, le circuit auxiliaire (20) comprenant un élément de commutation à semi-conducteurs auxiliaire (22 ; 32 ; 38 ; 40 ; 42) et un élément de capture de courant (24) qui peut stocker et/ou dissiper le courant connectés en série l'un avec l'autre, l'élément de commutation à semi-conducteurs auxiliaire (22; 32 ; 38 ; 40 ; 42) ayant une unité de commande (26 ; 126) qui y est connectée en service, l'ensemble de commutation à semi-conducteurs (10 ; 110) étant **caractérisé en ce que** l'unité de commande (26; 126) est configurée pour connecter l'élément de commutation à semi-conducteurs auxiliaire (22 ; 32; 38; 40; 42) lorsque l'élément de commutation à semi-conducteurs principal (12 ; 112) se met hors circuit pour diriger dans l'élément de capture de courant (24) ledit courant de récupération inverse (I_{RR1}, I_{RRN}) qui s'écoule à travers l'élément de commutation à semi-conducteurs principal (12 ; 112) tandis qu'il se met hors circuit.

2. Ensemble de commutation à semi-conducteurs (10 ; 110) selon la revendication 1, dans lequel l'unité de commande (26 ; 126) est configurée pour connecter et déconnecter sélectivement l'élément de commutation à semi-conducteurs auxiliaire (22 ; 32 ; 38 ; 40 ; 42) une pluralité de fois tandis que l'élément de commutation à semi-conducteurs principal (12 ; 112) est mis hors service pour commander la quantité de courant de récupération inverse (I_{RR1}, I_{RRN}) déviée dans l'élément de capture de courant (24).

3. Ensemble de commutation à semi-conducteurs (10 ; 110) selon la revendication 1 ou la revendication 2, dans lequel l'élément de capture de courant (24) stocke le courant de récupération inverse (I_{RR1}, I_{RRN}) qui y est dévié depuis l'élément de commutation à semi-conducteurs principal (12 ; 112).

4. Ensemble de commutation à semi-conducteurs (10 ; 110) selon la revendication 3, dans lequel l'élément de capture de courant (24) est ou comprend un dispositif de stockage d'énergie (46).

5. Ensemble de commutation à semi-conducteurs (10 ; 110) selon l'une quelconque des revendications précédentes, dans lequel l'élément de capture de courant (24) dissipe le courant de récupération inverse (I_{RR1}, I_{RRN}) qui y est dévié depuis l'élément de commutation à semi-conducteurs principal (12 ; 112).

6. Ensemble de commutation à semi-conducteurs (10 ; 110) selon la revendication 5, dans lequel l'élément de capture de courant (24) est ou comprend une impédance (50) ayant au moins un composant choisi parmi un composant résistif et un composant inductif.

7. Ensemble de commutation à semi-conducteurs (10 ; 110) selon l'une quelconque des revendications précédentes, dans lequel l'élément de commutation à semi-conducteurs auxiliaire (22 ; 32 ; 38 ; 40 ; 42) est ou comprend un transistor (28).

8. Ensemble de commutation à semi-conducteurs (10 ; 110) selon l'une quelconque des revendications précédentes, dans lequel l'élément de commutation à semi-conducteurs auxiliaire (22 ; 32 ; 38 ; 40 ; 42) est configuré pour fournir sélectivement une capacité de transmission de courant bidirectionnelle.

9. Ensemble de commutation à semi-conducteurs (10 ; 110) selon l'une quelconque des revendications précédentes, dans lequel l'unité de commande (26 ; 126) est configurée en outre pour connecter l'élément de commutation à semi-conducteurs auxiliaire (22; 32; 38; 40; 42) lorsque l'élément de commutation à semi-conducteurs principal (12 ; 112) est connecté en sorte que le courant s'écoulant de la première borne de connexion (14) à la seconde borne de connexion (16) soit dirigé pour s'écouler à travers le circuit auxiliaire (20) afin de réduire le taux de changement de courant s'écoulant à travers l'élément de commutation à semi-conducteurs principal (12 ; 112) immédiatement après que l'élément de commutation à semi-conducteurs principal (12 ; 112) a été connecté.

10. Ensemble de commutation à semi-conducteurs (10; 110) selon l'une quelconque des revendications précédentes, dans lequel l'unité de commande (26 ; 126) est en outre configurée pour connecter l'élément de commutation à semi-conducteurs auxiliaire (22 ; 32 ; 38 ; 40 ; 42) afin de dévier sélectivement le courant pour qu'il s'écoule à travers le circuit auxiliaire (20) afin de réduire le taux de changement de la tension apparaissant aux bornes de l'élément de commutation à semi-conducteurs principal (12 ; 112).

11. Chaîne de commutation à semi-conducteurs (100) pour utilisation dans un convertisseur d'énergie CCHT, comprenant :
une pluralité d'ensembles de commutation à semi-conducteurs connectés en série (10 ; 110) selon l'une quelconque des revendications précédentes ; et
une unité de commande (26 ; 126) connectée en service à chaque élément de commutation à semi-conducteurs auxiliaire (22 ; 32 ; 38 ; 40 ; 42),
la ou chaque unité de commande (26 ; 126) étant configurée pour connecter un élément de commutation à semi-conducteurs auxiliaire respectif (22 ; 32 ; 38 ; 40; 42) pour dévier dans l'élément de capture de courant correspondant (24) le courant de récupération inverse (I_{RR1}, I_{RRN}) qui s'écoule à travers l'élément de commutation à semi-conducteurs principal correspondant (12 ; 112) aux bornes duquel ledit élément de capture de courant (24) est connecté électriquement tandis que ledit élément de commutation à semi-conducteurs principal correspondant (12 ; 112) est mis hors circuit.

12. Chaîne de commutation à semi-conducteurs (100) selon la revendication 11, dans laquelle la ou chaque unité de commande (26; 126) est configurée en outre pour compenser l'écoulement de différentes quantités de courant de récupération inverse (I_{RR1}, I_{RRN}) à travers des éléments de commutation à semi-conducteurs principaux respectifs (12 ; 112) dans la chaîne de commutation (100) en coordonnant la connexion et la déconnexion des éléments de commutation à semi-conducteurs auxiliaires (22 ; 32 ; 38 ; 40 ; 42) de la chaîne de commutation (100) afin de faire passer des parties respectives du courant de récupération inverse (I_{RR1}, I_{RRN}) entre des éléments de commutation à semi-conducteurs principaux respectifs (12 ; 112) en sorte que chaque élément de capture de courant correspondant (24) reçoive la même quantité de courant de récupération inverse (I_{RR1}, I_{RRN}) en sorte que chaque élément de commutation à semi-conducteurs principal (12 ; 112) établisse le même niveau de tension de récupération inverse à ses bornes.

13. Chaîne de commutation à semi-conducteurs (100) selon la revendication 12, dans laquelle la ou chaque unité de commande (26 ; 126) est encore configurée pour contrôler la différence de courant de récupération inverse (I_{RR1}, I_{RRN}) s'écoulant à travers des éléments de commutation à semi-conducteurs principaux respectifs (12 ; 112) afin d'établir la taille de la partie de courant de récupération inverse qui passera entre lesdits éléments de commutation à semi-conducteurs principaux respectifs (12 ; 112).
